# EUROPEAN PATENT APPLICATION

(11) **EP 2 712 022 A1**
(43) Date of publication of application: **26.03.2014**
(21) Application number: 12185623.1
(22) Date of filing: 24.09.2012
(51) Int. Cl.: H01Q 1/22, H01Q 1/42, H01Q 9/04, H01Q 13/10, H04B 1/03, H04B 7/14, H04R 25/00

(54) **A stationary communication device comprising an antenna.**

(71) Applicant: Oticon A/S, 2765 Smørum (DK)
(72) Inventor: Klemmensen, Bjarne, DK-2765 Smørum (DK); Skjoldborg, Bo, DK-2765 Smørum (DK); Pedersen, Gert Frølund, DK-9280 Storvorde (DK)
(74) Representative: Nielsen, Hans Jørgen Vind

(57) **Abstract**

The application relates to a stationary communication device (1) comprising a housing (12) and an antenna (11) and a transceiver unit (Rx/Tx) operationally coupled to the antenna, the housing being adapted for assuming a specific orientation relative to the surface of the earth when placed in an operational state. The application further relates to a communication system. The object of the present application is to provide a stationary communication device (1) with an antenna (11) that facilitates wireless communication to a portable communication device (2). The problem is solved in that the antenna is vertically polarized. An advantage of the disclosure is that a stationary wireless communication device (1) with a small height can be implemented. The invention may e.g. be used for the hearing aids, headsets, ear phones, active ear protection systems, handsfree telephone systems, mobile telephones, and accessories to such devices.

## Description

### TECHNICAL FIELD

The present application relates to communication between stationary and portable communication devices, each device comprising an antenna for establishing a wireless link to the other device, the stationary device comprising e.g. an audio delivery device for transmitting an audio signal to the portable communication device comprising e.g. a listening device, such as a hearing aid or a portable device in communication with a hearing aid. The application furthermore relates to a communication system.

Embodiments of the disclosure may e.g. be useful in applications such as hearing aids, headsets, ear phones, active ear protection systems, handsfree telephone systems, mobile telephones, and accessories to such devices.

### BACKGROUND

The following account of the prior art relates to one of the areas of application of the present application, wireless assistive listening devices (ALD).

Wireless communication between electronic devices (including body worn devices) is becoming increasingly common. Due to the relative mobility of the devices which are to wirelessly communicate with each other and to size and power restrictions in body worn devices, the implementation of such communication systems may impose significant challenges on system design. The mobility of transmitter and receiver relative to each other poses restrictions on orientation and/or polarization (the orientation of the electric field relative to the surface of the earth) of the involved antennas.

In general, the polarization of the transmitting and receiving antennas should preferably match each other. For *body worn or ear level,* battery driven wireless Assistive Listening Devices (ALD), an antenna with a vertical polarization pattern is preferred in comparison to an antenna with horizontal polarization, as the latter will have dead angles with respect to radiated power depending on the position between a transmitter/receiver (e.g. a stationary audio delivery device) and a receiver/transmitter (e.g. a portable audio receiving device). In general, a loop antenna is not easy to realize with the bandwidth needed - and antenna matching is also difficult with such antenna.

To avoid dead angles between a *stationary* ALD, e.g. an audio delivery device transmitting sound from a TV or a stationary telephone, to a *portable,* body worn or ear level, battery driven ALD, the stationary device should likewise be provided with an antenna with vertical polarization. However, since the form factor (e.g. height restrictions) is important for such stationary devices, they are typically either equipped with
1: An internal antenna with horizontal polarization, or
2: An external antenna, e.g. a 1/4 wave or 1/2 wave monopole or dipole.

The latter does not always comply with an aesthetic design expression, i.e. the first solution is very often chosen at the cost of reduced wireless robustness (link quality).

### SUMMARY

An object of the present application is to provide a stationary communication device with an antenna that facilitates wireless communication to a portable communication device.

Objects of the application are achieved by the invention described in the accompanying claims and as described in the following.

### A stationary communication device:

The solution is the provision of an antenna with a small height and vertical polarization that can be implemented in a stationary communication device (e.g. an ALD) without comprising the physical design expression of the communication device (such physical design being often restricted in its height, i.e. it dimension in a direction perpendicular to the surface of the earth, termed a 'vertical direction').

In an aspect of the present application, an object of the application is achieved by a stationary communication device comprising a housing and an antenna and a transceiver unit operationally coupled to the antenna, the housing being adapted for assuming a specific orientation relative to the surface of the earth when placed in an operational state, wherein the antenna is vertically polarized. It is assumed that the antenna is vertically polarized, when the stationary communication device is placed in an operational state.

An advantage of the disclosure is that a stationary wireless communication device with a small height can be implemented.

In an embodiment, the antenna is substantially planar in that it comprises one plane surface comprising an electrically conductive material that contributes to reception and/or transmission of electromagnetic radiation. In an embodiment, the electrically conductive material comprises Fe, Nl, or Cu, or a combination thereof. In an embodiment, the material comprises Cu plated with Ni and/or Sn.

In an embodiment, the antenna is an annular slot antenna. In an embodiment, the annular slot antenna is made on a substrate, e.g. a printed circuit board, comprising metalized area with an annular slot, the metalized area being supported by an electrically insulating layer or substrate.

In an embodiment, the antenna is a circular patch antenna. In an embodiment, the circular patch antenna is made from a foil or plate of a solid electrically conductive (e.g. metallic) material. In an embodiment, the circular patch antenna comprises a radial slot. Alternatively, the antenna may be a solid disc without any perforations. In an embodiment, the radial slot extends radially from the centre of the circular patch and is generated by making a partial cut-out fixed at the centre of the circular patch and bent 90° to constitute or contribute to a centre pole for electrically feeding the antenna. In an embodiment, the radial slot is generated by (partially) punching (or cutting, e.g. by a laser) out the material that generates the slot when the material is bent out from the plane surface of the circular patch antenna. Alternatively, a separate feeding pole may be attached to the circular disc by typical means, e.g. soldering, welding, (e.g. electrically conductive) adhesive material, etc. Preferably, the feeding pole is adapted for being electrically connected to a substrate, e.g. a printed circuit board, e.g. by soldering. In an embodiment, the substrate comprises other components of the stationary communication device, e.g. the transceiver unit, and corresponding conductors allowing an appropriate mutual electrical connection of said components, including the antenna and the transceiver unit. In an embodiment, the radial slot extends radially from the centre of the circular patch without intersecting the perimeter of the circular patch.

In an embodiment, the antenna is mounted in the housing to have its plane surface horizontally oriented when the communication device is in an operational state. In an embodiment, the housing comprises a bottom wall adapted to be placed horizontally when the communication device is in an operational state. In an embodiment, the antenna is mounted to have its plane surface parallel to said bottom wall of the housing.

In an embodiment, the housing has maximum dimensions H_{SD} (height) and W (width) in at least two perpendicular directions, respectively, here termed vertical and horizontal and intended to indicate directions perpendicular and parallel to the surface of the earth, respectively, when the stationary communication device is located in a normal operational state. In an embodiment, the ratio of the width to height of the housing is larger than 1, such as larger than 2, such as larger than 5, such as larger than 10. In an embodiment, the housing has at least one substantially plane face. In an embodiment, the housing has at least two substantially plane opposing faces, substantially extending in horizontal planes, when the stationary communication device is located in a normal operational state. In an embodiment, the housing has a substantially constant height H_{SD}. In an embodiment, the housing has a polygonal (e.g. rectangular, such as square) or elliptical (e.g. circular) form, when viewed in a horizontal cross section.

In general, the height Hₐₙₜ of the feeding pin may vary considerably in various embodiments of the antenna, e.g. adapted to the specific implementation. In general, the height Hₐₙₜ of the feeding pin providing a separation of the circular patch antenna from a substrate whereon the antenna is mounted is smaller than the maximum height H_{SD} of the housing. In an embodiment, the ratio of the diameter Dₐₙₜ of the circular patch to the height Hₐₙₜ of the feeding pin is in the range from 2 to 5, preferably in the range from 2.5 to 3.5.

In general, the dimensions indicated should be related to a wavelength of the operating frequency of the antenna. The relationship between wavelength (λ) and frequency (f) is λ=c/f, where c is the speed of light (c=3*10⁸ m/s in vacuum). In an embodiment, the height of the feeding pin is in the range from 10-15 mm. For a frequency of f=2.4 GHz, the wavelength λ is 125 mm. The preferred range 10-15 mm (at 2.4 GHz) may thus be indicated as 0.08 - 0.12, relative to the wavelength. The preferred range at 5.8 GHz is thus 5 mm -7.5 mm. In other words, it decreases linearly with increasing frequency.

In an embodiment, the transceiver unit and antenna are adapted for establishing a wireless link transmitting signals in a frequency range above 300 MHz, e.g. in the 900 MHz range or in the 2.4 GHz range or in the 5.8 GHz range. Preferably, the wireless link is an audio link specifically adapted to transmit an audio signal, preferably including embedded control and/or status signals. In an embodiment, the transceiver unit comprises an audio codec-unit adapted for coding and decoding the transmitted and received signal, respectively, according to an audio codec (for compression and decompression, respectively, of a digital audio stream). Such audio codec may comprise any standardized or proprietary algorithm, such as G.722, G. 726, CVSD, MP3 or SBC. In an embodiment, the transceiver unit comprises a wireless interface adapted for implementing a standardized or proprietary scheme for data exchange. In an embodiment, the scheme data for data exchange is optimized for short range data exchange. Examples of such standardized schemes are Bluetooth (e.g. Bluetooth Low Energy), DECT, Wi-Fi (IEEE 802.11), ZigBee, NFC, RuBee, etc. Alternatively, proprietary schemes may be used.

In an embodiment, the stationary communication device is adapted for transmitting an audio signal from an entertainment device or a telephone device. In an embodiment, the stationary communication device is integrated with said entertainment device or telephone device. In an embodiment, the entertainment device comprises a display for showing images accompanying said audio signal (e.g. as embodied in a TV or a PC or a combination thereof). In an embodiment, the telephone device comprises a stationary telephone or is embodied in a computer, e.g. a PC.

In general, the dimensions of the antenna are adapted to the transmission range of the antenna (and possibly to the power budget for the transceiver unit). In an embodiment the circular patch antenna has a diameter of 35 mm (at 2.4 GHz). In an embodiment the circular patch antenna has a slot width of 2.5 mm. In an embodiment the circular patch antenna has a slot length of 12.8 mm. In an embodiment the circular patch antenna is made of a sheet metal, e.g. steel or iron, of 0.2 mm to 0.3 mm thickness. In an embodiment, such antenna is adapted for transmission and/or reception in the GHz range, e.g. around 2.4 GHz or 5.8 GHz. Dimensions given for f=2.4 GHz are preferably scaled to other frequencies as indicated above.

In an embodiment, the stationary communication device has a wired connection to a source of energy, e.g. to the mains power supply. Alternatively, it may comprise a wireless connection to a power supply or a local energy source, e.g. a battery, e.g. a rechargeable battery.

In general, the wireless link established by the antenna and transceiver circuitry of the communication device can be of any type. In an embodiment, the wireless link is used under power constraints, e.g. in that the stationary communication device (or a device with which it communicates) is a portable (typically battery driven) device. In an embodiment, the wireless link is based on far-field, electromagnetic radiation. In an embodiment, the communication via the wireless link is arranged according to a specific modulation scheme, e.g. an analogue modulation scheme, such as FM (frequency modulation) or AM (amplitude modulation) or PM (phase modulation), or a digital modulation scheme, such as ASK (amplitude shift keying), e.g. On-Off keying, FSK (frequency shift keying), PSK (phase shift keying) or QAM (quadrature amplitude modulation).

Preferably, communication between the stationary communication device and the other device (e.g. a portable communication device) is based on some sort of modulation at frequencies above 100 kHz. Preferably, frequencies used to establish communication between the stationary communication device and the other device is below 70 GHz, e.g. around 60 GHz, e.g. located in a range from 50 MHz to 70 GHz, e.g. above 300 MHz, e.g. in an ISM range above 300 MHz, e.g. in the 900 MHz range or in the 2.4 GHz range, or in the 5.8 GHz range or in the 60 GHz range.

In an embodiment, the stationary communication device and/or the device with which it communicates comprises an electrically small antenna. An 'electrically small antenna' is in the present context taken to mean that the spatial extension of the antenna (e.g. the maximum physical dimension in any direction) is much smaller than the wavelength λ_{Tx} of the transmitted electric signal. In an embodiment, the spatial extension of the antenna is a factor of 10, or 50 or 100 or more, or a factor of 1 000 or more, smaller than the carrier wavelength λ_{Tx} of the transmitted signal. In an embodiment, the stationary communication device and/or the device with which it communicates comprises is a relatively small device. The term 'a relatively small device' is in the present context taken to mean a device whose maximum physical dimension (and thus of an antenna for providing a wireless interface to the device) is smaller than 15 cm, such as smaller than 10 cm, such as smaller than 5 cm. In an embodiment 'a relatively small device' is a device whose maximum physical dimension is much *smaller* (e.g. more than 3 times, such as more than 10 times smaller, such as more than 20 times small) than the operating wavelength of a wireless interface to which the antenna is intended. In an embodiment, the stationary communication device and/or the device with which it communicates has a maximum outer dimension of the order of 0.15 m (e.g. an audio delivery device or a handheld mobile telephone, respectively). In an embodiment, the stationary communication device and/or the device with which it communicates has a maximum outer dimension of the order of 0.08 m (e.g. telephone adaptor device or a head set, respectively). In an embodiment, the stationary communication device and/or the device with which it communicates has a maximum outer dimension of the order of 0.04 m (e.g. a hearing instrument).

In an embodiment, the stationary communication device and/or the device with which it communicates is a low power device. The term 'low power device' is in the present context taken to mean a device whose energy budget is restricted, e.g. because it is a portable device, e.g. comprising an energy source (e.g. of limited size, e.g. with a maximum capacity of 1000 mAh, such as 500 mAh), which - without being exchanged or recharged - is of limited duration (the limited duration being e.g. of the order of hours or days, e.g. max. 1 or 3 or 7 or 10 days (during normal operation of the device), such duration being limited compared to the expected life time of the device).

### Use:

In an aspect, use of a stationary communication device as described above, in the 'detailed description of embodiments' and in the claims, is moreover provided. In an embodiment, use is provided in a system comprising audio distribution, e.g. a system comprising transmission of audio from a stationary device to a mobile (listening) device. In an embodiment, use is provided in a system comprising a stationary communication device and one or more hearing instruments, headsets, ear phones, active ear protection systems, etc., e.g. in a handsfree telephone system, a teleconferencing system, a public address system, a karaoke system, a classroom amplification system, etc.

### A communication system:

In a further aspect, a communication system comprising a stationary communication device as described above, in the 'detailed description of embodiments', and in the claims, AND a portable communication device is moreover provided by the present application. The communication system is adapted to establish a wireless communication link between the stationary communication device and the portable communication device to provide that information can be exchanged between them or forwarded from one to the other, and wherein the wireless communication link is established in the stationary communication device using the transceiver unit and the antenna.

In an embodiment, the system is adapted to provide that information may comprise control, status signals, and possibly audio signals.

In an embodiment, the portable communication device is or comprises an audio gateway device adapted for receiving a multitude of audio signals (e.g. from an entertainment device, e.g. a TV or a music player, a telephone apparatus, e.g. a mobile telephone or a computer, e.g. a PC) and adapted for selecting and/or combining an appropriate one of the received audio signals (or combination of signals) for transmission to another portable communication device (e.g. a listening device, such as a hearing instrument). In an embodiment, the portable communication device is or comprises a remote control device for controlling functionality and operation of another portable communication device, e.g. one or more listening device(s), such as hearing instruments. In an embodiment, the portable communication device is or comprises a listening device, e.g. a hearing instrument, e.g. a hearing instrument adapted for being located at the ear or fully or partially in the ear canal of a user. In an embodiment, the portable communication device is or comprises a headset, an earphone, an ear protection device or a combination thereof.

In an embodiment, the communication system comprises two listening devices adapted to implement a binaural listening system, e.g. a binaural hearing aid system.

In an embodiment, the portable communication device is adapted to provide a frequency dependent gain to compensate for a hearing loss of a user. In an embodiment, the portable communication device comprises a signal processing unit for enhancing the input signals and providing a processed output signal.

In an embodiment, the portable communication device comprises an output transducer for converting an electric signal to a stimulus perceived by the user as an acoustic signal. In an embodiment, the output transducer comprises a number of electrodes of a cochlear implant or a vibrator of a bone conducting hearing device. In an embodiment, the output transducer comprises a receiver (speaker) for providing the stimulus as an acoustic signal to the user.

In an embodiment, the portable communication device comprises an input transducer for converting an input sound to an electric input signal.

In an embodiment, the portable communication device comprises an antenna and transceiver circuitry for wirelessly receiving a direct electric input signal from another device, e.g. the stationary communication device or another portable communication device. In an embodiment, the direct electric input signal represents or comprises an audio signal and/or a control signal and/or an information signal. In an embodiment, the portable communication device comprises demodulation circuitry for demodulating the received direct electric input to provide the direct electric input signal representing an audio signal and/or a control signal e.g. for setting an operational parameter (e.g. volume) and/or a processing parameter of the portable communication device.

Further objects of the application are achieved by the embodiments defined in the dependent claims and in the detailed description of the invention.

As used herein, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element or intervening elements may be present, unless expressly stated otherwise. Furthermore, "connected" or "coupled" as used herein may include wirelessly connected or coupled. As used herein, the term "and/or" includes any and all combinations of one or more of the associated listed items. The steps of any method disclosed herein do not have to be performed in the exact order disclosed, unless expressly stated otherwise.

### BRIEF DESCRIPTION OF DRAWINGS

The disclosure will be explained more fully below in connection with a preferred embodiment and with reference to the drawings in which:

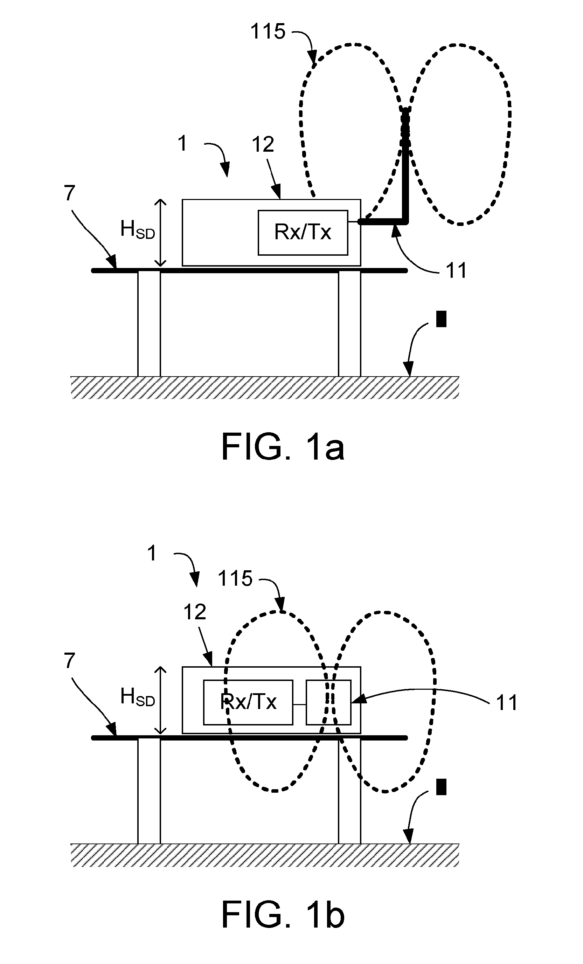

FIG. 1 illustrates the aim of the present disclosure to substitute a prior art monopole antenna with an internal antenna in a stationary communication device, FIG. 1a showing a prior art embodiment comprising an external monopole antenna, FIG. 1b showing an embodiment according to the present disclosure comprising an internal antenna with a radiation diagram emulating the radiation diagram of an external ½ wave vertical monopole antenna,

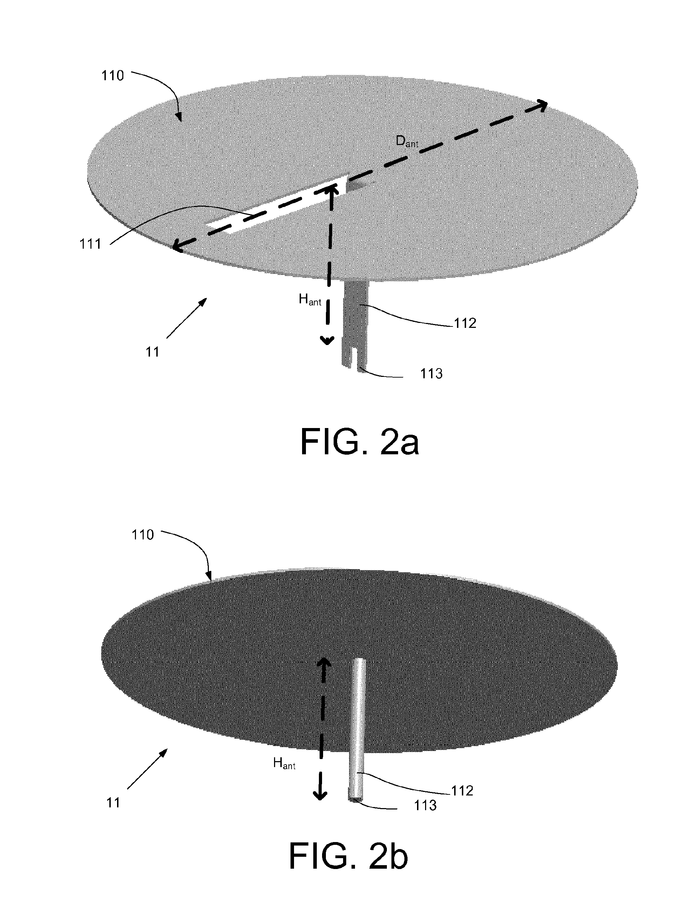

FIG. 2 shows two embodiments of a circular patch antenna for a stationary communication device according to the present disclosure, FIG. 2a illustrating an antenna comprising a radial slot, FIG. 2b illustrating an antenna without a radial slot,

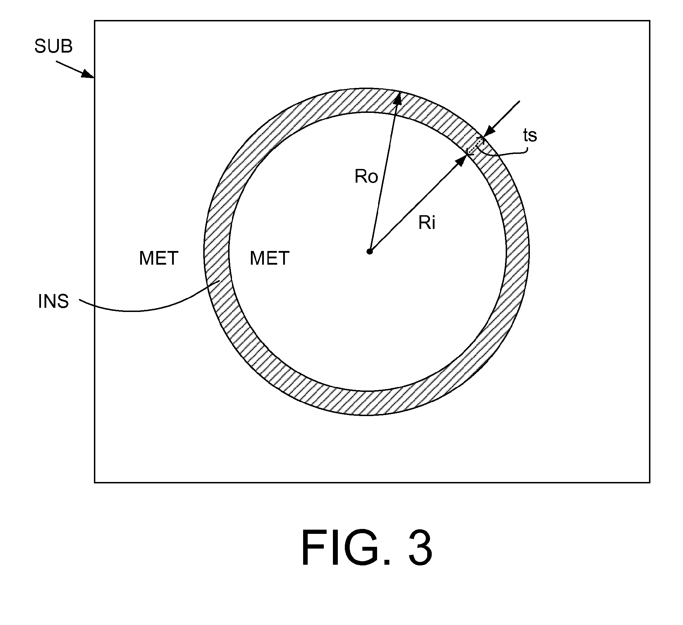

FIG. 3 shows an embodiment of an annular slot antenna for a stationary communication device according to the present disclosure,

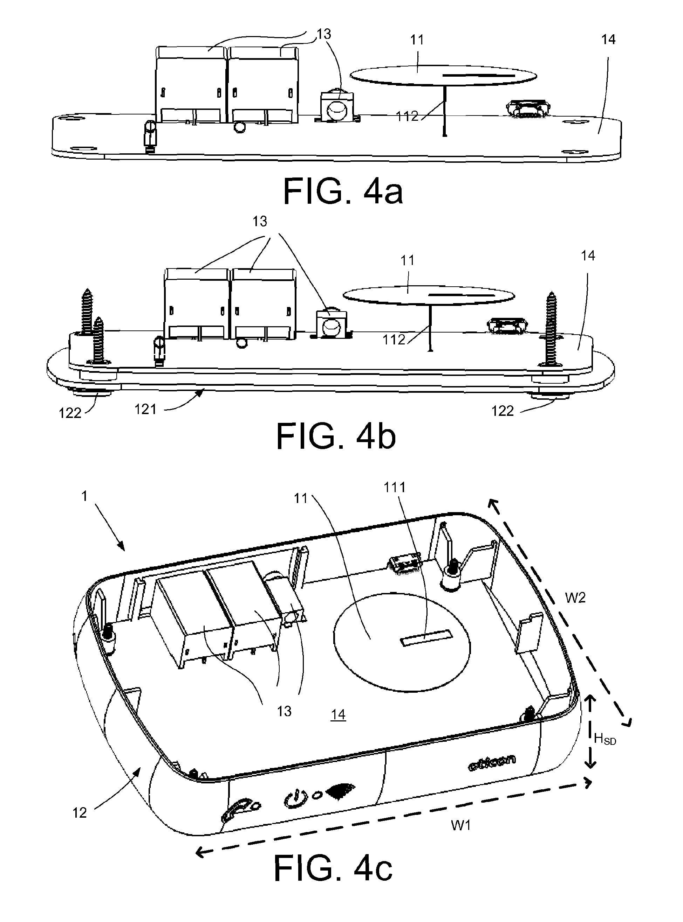

FIG. 4 shows various perspective views of (parts of) a stationary communication device according to the present disclosure, FIG. 4a illustrating a slightly tilted side view of a substrate having various components, including a circular patch antenna mounted on its upper surface, FIG. 4b illustrating a slightly tilted side view of the substrate of FIG. 4a mounted on a bottom part of a housing of the stationary communication device, and FIG. 4c showing a slightly tilted view of the housing of the stationary communication device (without a top face) illustrating the substrate of FIG. 4a mounted in the housing, and

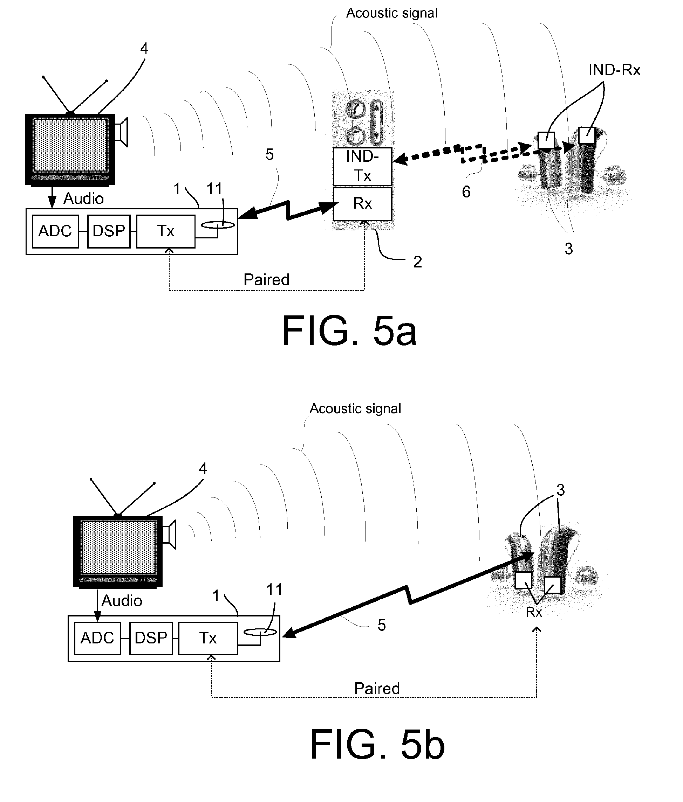

FIG. 5 shows a communication system according to embodiments of the present disclosure, where the stationary communication device is in communication with a portable audio gateway device (FIG. 5a), and where the stationary communication device is in communication with a pair of ear worn hearing instruments (FIG. 5b).

The figures are schematic and simplified for clarity, and they just show details which are essential to the understanding of the disclosure, while other details are left out. Throughout, the same reference numerals are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

Body worn communication devices (e.g. listening devices, e.g. hearing aids) typically comprise vertically polarized antennas. It is therefore advantageous that stationary communication devices (e.g. an audio delivery device) adapted for communication with such body worn devices contain an antenna providing a vertically polarized E-field. Prior art stationary communication devices have typically used an external monopole antenna.

FIG. 1 illustrates the aim of the present disclosure to substitute a prior art monopole antenna with an internal antenna in a stationary communication device, FIG. 1a showing a prior art embodiment comprising an external monopole antenna, FIG. 1b showing an embodiment according to the present disclosure comprising an internal antenna with a radiation diagram emulating the radiation diagram of an external ½ wave vertical monopole antenna.

FIG. 1 shows a stationary communication device 1 comprising a housing 12 and an antenna 11 and a transceiver unit (Rx/Tx) operationally coupled to the antenna 11, the housing 12 being located on a table 7 having the upper surface of the table top arranged parallel to the floor surface 8, when placed in an operational state. The housing 12 may alternatively be placed on any other support providing a specific orientation of the antenna 11 relative to the surface of the earth 8. The important issue is that the (fixed) orientation of the housing and the orientation of the antenna of the stationary communication device are adapted to provide that the antenna is vertically polarized, e.g. in that the radiation diagram 115 of the antenna resembles the radiation diagram of an external ½ wave vertical monopole antenna. The height H_{SD} of the stationary communication device 1 is typically intended to be kept as small as possible for aesthetic reasons. FIG. 1 a shows a prior art stationary communication device 1 comprising an external monopole antenna 11. FIG. 1b shows an embodiment of a stationary communication device 1 according to the present disclosure comprising an *internal* antenna 11 with a radiation diagram 115 emulating the radiation diagram of an external ½ wave vertical monopole antenna. The housing 12 of the stationary communication device 1 is adapted to allow the electromagnetic field transmitted or received by the antenna 11 to be relatively undisturbed by the housing (at least in directions where the portable communication device(s) with which the stationary communication device is adapted to communicate is(are) expected to be located). In an embodiment, the housing 12 comprises a material with a relatively low dielectric constant (e.g. having a relative permittivity εᵣ of less than 10, such as less than 5, e.g. less than 3), e.g. a polymer material.

FIG. 2 and 3 illustrate two examples of antenna types that each may be used as an internal antenna in a stationary communication device according to the present disclosure.

FIG. 2 shows two embodiments of a circular patch antenna for a stationary communication device according to the present disclosure, FIG. 2a illustrating an antenna comprising a radial slot, FIG. 2b illustrating an antenna without a radial slot. The circular patch antenna 11 of FIG. 2 comprises a circular sheet 110 of an electrically conducting material, e.g. comprising iron (Fe) and/or copper (Cu). The electrically conducting sheet 110 may be self-supporting or supported by a carrier, the carrier e.g. comprising an electrically insulating material. The embodiment of FIG. 2a comprises a radially extending opening (here a rectangular slot) 111. The opening extends radially from the centre of the circular patch without intersecting the perimeter of the circular patch. The opening is generated by making a partial cut-out, which is fixed (no cut) at the centre of the circular patch and bent 90° (downwards) to constitute or contribute to a centre pole 112 for electrically feeding the antenna. Preferably, the antenna is designed so that the difference in electromagnetic properties between the antenna with and without cut-out is negligible. Alternatively, the influence of the cut-out is considered in the design of the radiation field of the antenna. A small cutout in the end of the central pole is made to facilitate mechanical and electrical connection (e.g. including soldering) of the antenna to a substrate (e.g. comprising a transceiver unit for driving the antenna in a transmit mode and for receiving signals from the antenna in a receive mode). FIG. 2b shows an embodiment of a circular path antenna 11 comprising a circular feeding pin. The feeding pin is preferably centrally located. In an embodiment, the feeding pin comprises a coaxial conductor comprising centre conductor and a surrounding electromagnetic screen. In an embodiment the antenna 11 is electrically connected to components on a substrate via strip-line conductors. In general, the dimensions of the antenna are adapted to the transmission range of the antenna (and possibly to the power budget for the transceiver unit). In an embodiment the circular patch antenna is adapted for transmission and/or reception around 2.4 GHz and has a diameter Dₐₙₜ of 35 mm, a slot width of 2.5 mm, and a slot length of 12.8 mm. In an embodiment the circular patch antenna is made of a sheet metal, e.g. steel or iron, of 0.2 mm to 0.3 mm thickness. The thickness, of the sheet metal is in general not critical (as long as it is larger than the skin depth at the frequency considered (a few µm at 2.4 GHz)), but may be determined with a view to other restrictions than electric, e.g. mechanical stability. Preferably the height Hₐₙₜ of the feeding pin providing a separation of the circular patch antenna from the substrate is in the range from 10-15 mm, e.g. 12.8 mm for the 35 diameter circular patch antenna (at 2.4 GHz). Preferably no components are mounted in the open space between the circular patch antenna and the substrate. Preferably, the substrate comprises a ground plane of an electrically conducting material in an area below the patch antenna. Preferably, the ground plane is relatively even. In an embodiment, the area below the patch antenna comprises one or more components (e.g. a connector), preferably comprising a metalized layer electrically connected to ground potential. Preferably, no electronic components are mounted on the substrate between the patch antenna and the ground plane. In an embodiment, the ground plane below the patch antenna comprises one or more non-conducting areas where the ground plane is not present (i.e. where the electrically conducting layer comprises holes or openings). Preferably each of such non-conducting areas has a maximum dimension smaller than 1/100 times the wavelength at the operating frequency of the patch antenna.

FIG. 3 shows an embodiment of an annular slot antenna for a stationary communication device according to the present disclosure. In an embodiment, the annular slot antenna 11 is made on a substrate SUB, e.g. a printed circuit board, comprising metalized area MET with an annular slot INS, the metalized area being supported by an electrically insulating layer or substrate. The planar antenna comprises a central circular electrically conducting plate or foil or layer of radius Ri surrounded by a ring of an electrically insulating material of radial thickness ts, which again is surrounded by a layer of electrically conducting material. The outer perimeter of the insulating ring has a radius of Ro (where Ro=Ri+ts). The annular slot antenna may e.g. be implemented on a (possibly multi layer) printed circuit board (PCB) where the electrically conducting material of the antenna is formed in a metal layer of the PCB. The metal layer is supported by an electrically insulating layer. The annular ring is formed by removing the metal layer to expose the ring of insulating material.

FIG. 4 shows various perspective views of (parts of) a stationary communication device according to the present disclosure, FIG. 4a illustrating a slightly tilted side view of a substrate having various components, including a circular patch antenna mounted on its upper surface, FIG. 4b illustrating a slightly tilted side view of the substrate of FIG. 4a mounted on a bottom part of a housing of the stationary communication device, and FIG. 4c showing a slightly tilted view of the housing of the stationary communication device (without a top face) illustrating the substrate of FIG. 4a mounted in the housing.

The stationary communication device 1 is here embodied in an adapter for a fixed line ('landline') telephone apparatus to enable its wireless connectivity to a listening device, e.g. via a body worn audio gateway (cf. device 2 in FIG. 5a) or directly to the listening device (e.g. one or a pair of hearing instruments, cf. 3 in FIG. 5). In practical use, the stationary communication device 1 and the portable communication device must be paired in advance of establishing an exchange of data via the wireless link, if the scheme for data exchanges requires such pairing (as is e.g. the case with Bluetooth).

The substrate 14 of FIG. 4a, e.g. a printed circuit board, comprises electrical conductors for connecting components mounted on the substrate. In FIG. 4a only antenna 11 and three connectors 13 for connecting a power converter, a fixed line telephone apparatus and a fixed telephone line to the stationary communication device 1 are shown. In practice other components may be arranged on the substrate (e.g. one or more of a transceiver unit, a signal processing unit, a visual indicator, an activation element, etc.). The circular patch antenna 11 comprises a radial slot as illustrated and discussed in connection with FIG. 2a. Alternatively other embodiments of the antenna may be used (e.g. as shown in FIG. 2b or FIG. 3). The antenna 11 is electrically connected to the substrate via central feeding pin 112.

FIG. 4b shows the substrate 14 of FIG. 4a mounted on a (plane) carrier 121 (e.g. forming part of a bottom part of housing 12 of the stationary communication device 1 (cf. FIG. 4c)). The substrate is fixed to the carrier (housing) by fastening elements, here screws. The bottom (externally oriented) face of the carrier comprises support elements 122 (e.g. comprising rubber or other slip-resistant material, e.g. forming part of the fastening elements) adapted for allowing a stable placement (preferably horizontal) of the stationary communication device 1 on a support, e.g. a table or shelf or a larger device, etc.

FIG. 4c shows the housing 12 of the stationary communication device 1 (without a top face) illustrating the substrate 14 of FIG. 4a mounted in the housing, thereby enclosing antenna 11 and other components of the stationary communication device in the housing 12. Maximum dimensions W1, W2 and H_{SD} are indicated by dashed arrows. The housing 12 of stationary communication device 1 is intended for horizontal placement, whereby antenna 11 (having its plane surface parallel to carrier (housing part) 121, cf. FIG. 4b) is positioned to provide vertical polarization of electromagnetic signals radiated from the antenna 11. In an embodiment, the ratio of the dimension of the largest side W1 to the height H_{SD} of the housing 12 is larger than or equal to 5, such as larger than or equal to 8 or larger than or equal to 10.

FIG. 5 shows a communication system according to embodiments of the present disclosure, where the stationary communication device is in communication with a portable audio gateway device (FIG. 5a), and where the stationary communication device is in communication with a pair of ear worn hearing instruments (FIG. 5b).

FIG. 5a shows an embodiment of a communication system comprising a TV-set 4 operationally connected to (e.g. physically integrated with) a stationary communication device 1, a portable communication device 2 (in the form of an audio gateway device) and a pair of hearing instruments 3. The stationary and portable communication devices are adapted to establish a wireless transmission link 5 between them. The stationary communication device 1 comprises functional units *ADC, DSP, Tx* and antenna 11. Analogue to digital converter ADC receives an analogue audio signal *Audio* from the TV-set 4 and converts it to a digital audio signal (if a digital audio signal *Audio* is received from the TV-set, the ADC-unit may be omitted). The digital audio signal is fed to a signal processing unit *DSP,* e.g. for applying a digital compression scheme (audio CODEC) or other signal processing to the digital audio signal. The processed signal is fed to transceiver Tx and antenna 11 for modulation and transmission to the portable communication device 2. The portable communication device 2 comprises an antenna and transceiver unit Rx adapted to receive the transmitted signal from the stationary communication device, and to possibly extract the audio signal. In an embodiment, the wireless transmission link is based on Bluetooth, cf. solid arrow 5 in FIG. 5a. The communication between the portable communication device 2 (here an audio gateway) and the hearing instruments 3 is provided by a bi-directional wireless inductive link, cf. dashed arrow 6 in FIG. 5a. The portable communication device 2 and the hearing instrument(s) 3 each comprise inductive transceivers, i.e. transmitter(s) *IND-Tx* and receiver(s) *IND-Rx* for modulating/transmitting and receiving/demodulating, respectively, the audio signal received from the stationary communication device 1. Alternatively, the inductive link 6 may be uni-directional, thereby saving power in the hearing instruments (and in the portable communication device). Alternatively, the communication between the portable communication device 2 and the hearing instrument(s) 3 may be based on wired connection(s) or wireless connections other than inductive (e.g. radiated electromagnetic fields (e.g. based on Bluetooth or the like), acoustic, ultrasonic or optic signals).

The propagation of the acoustic signal (e.g. identical to the one transmitted via links 5 and 6) from a loud speaker of the TV-set to the hearing aid(s) is indicated by the arcs denoted *Acoustic signal* in FIG. 5a and 5b. A pairing of the stationary communication device 1 and the portable 2, 3 communication device(s) preceding the establishment of communication link 5 between the devices is indicated in FIG. 5a and 5b by dotted arrows denoted *Paired.*

FIG. 5b shows an embodiment of a communication system comprising a TV-set 4 operationally connected to (e.g. physically integrated with) a stationary communication device 1 (as described in connection with FIG. 5a) and a pair of hearing instruments 3 (here taking the role of the portable communication devices) *without* using the intermediate, audio gateway device 2 described in relation to FIG. 5a. The wireless transmission link 5 is established directly between the stationary communication device 1 comprising the transmitter (*Tx* and antenna 11 in FIG. 5b) and the hearing instruments 3, at least one of which (e.g. both) comprising a receiver (antenna (not shown) and transceiver Rx in FIG. 5b), whereby an audio signal (*Audio*) from the TV-set 4 can be transmitted to the hearing instruments 3 and played for a user via loudspeakers of the hearing instruments.

The invention is defined by the features of the independent claim(s). Preferred embodiments are defined in the dependent claims. Any reference numerals in the claims are intended to be non-limiting for their scope.

Some preferred embodiments have been shown in the foregoing, but it should be stressed that the invention is not limited to these, but may be embodied in other ways within the subject-matter defined in the following claims and equivalents thereof.

## Claims

1. A stationary communication device comprising a housing and an antenna and a transceiver unit operationally coupled to the antenna, the housing being adapted for assuming a specific orientation relative to the surface of the earth when placed in an operational state, wherein the antenna is vertically polarized.

2. A stationary communication device according to claim 1 wherein the antenna is substantially planar in that it comprises one plane surface comprising an electrically conductive material that contributes to reception and/or transmission of electromagnetic radiation.

3. A stationary communication device according to claim 2 wherein the antenna is an annular slot antenna.

4. A stationary communication device according to claim 2 wherein the antenna is a circular patch antenna.

5. A stationary communication device according to claim 4 wherein the circular patch antenna comprises a radial slot.

6. A stationary communication device according to claim 5 wherein the radial slot extends radially from the centre of the circular patch and is generated by making a partial cut-out fixed at the centre of the circular patch and bent 90° to constitute or contribute to a centre pole for electrically feeding the antenna.

7. A stationary communication device according to claim 6 wherein the radial slot extends radially from the centre of the circular patch without intersecting the perimeter of the circular patch.

8. A stationary communication device according to any one of claims 2-7 wherein the antenna is mounted in the housing to have its plane surface horizontally oriented when the communication device is in an operational state.

9. A stationary communication device according to any one of claims 1-8 wherein the housing comprises a bottom wall adapted to be placed horizontally when the communication device is in an operational state.

10. A stationary communication device according to claim 9 wherein the antenna is mounted to have its plane surface parallel to said bottom wall of the housing.

11. A stationary communication device according to any one of claims 1-10 wherein the transceiver unit and antenna are adapted for establishing a wireless link transmitting signals in a frequency range above 300 MHz, e.g. in the 900 MHz range or in the 2.4 GHz range or in the 5.8 GHz range or in the 60 GHz range.

12. A stationary communication device according to any one of claims 1-11 is adapted for transmitting an audio signal from an entertainment device or a telephone device.

13. Use of a stationary communication device as claimed in any one of claims 1-12.

14. A communication system comprising a stationary communication device according to any one of claims 1-12 and a portable communication device, wherein the communication system is adapted to establish a wireless communication link between the stationary communication device and the portable communication device to provide that information can be exchanged between them or forwarded from one to the other, and wherein the wireless communication link is established in the stationary communication device using the transceiver unit and the antenna.

15. A communication system according to claim 14 wherein the portable communication device is or comprises an audio gateway device adapted for receiving a multitude of audio signals, a remote control device for controlling functionality and operation of another portable communication device, or a listening device or a combination thereof.
